(19) Europäisches Patentamt
European Patent Office
Office européen des brevets

(11) **EP 0 918 076 B1**

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(51) Int Cl.$^7$: **C09C 1/24**, C09D 7/12, B32B 9/00, C08K 3/00, C01G 49/06, C08K 3/22

(21) Anmeldenummer: **98121458.8**

(22) Anmeldetag: **11.11.1998**

(54) **Nicht-silkende Eisenoxidgelb-Pigmente mit hoher Buntheit**

Non-silking yellow iron oxide pigments with high variegation

Pigments nuancés à base d'oxyde de fer jaune n'ayant pas d'effets Silking

(84) Benannte Vertragsstaaten:
**DE ES FR GB IT NL**

(30) Priorität: **19.11.1997 DE 19751141**

(43) Veröffentlichungstag der Anmeldung:
**26.05.1999 Patentblatt 1999/21**

(73) Patentinhaber: **Bayer Chemicals AG**
**51368 Leverkusen (DE)**

(72) Erfinder:
• **Pitzer, Ulrike Dr.**
**47800 Krefeld (DE)**
• **Naumann, Rolf Dr.**
**47802 Krefeld (DE)**
• **Braun, Rolf-Michael Dr.**
**47802 Krefeld (DE)**

(56) Entgegenhaltungen:
**EP-A- 0 387 572        EP-A- 0 704 498**
**EP-A- 0 704 500**

• **PATENT ABSTRACTS OF JAPAN vol. 016, no. 228 (C-0944), 27. Mai 1992 (1992-05-27) & JP 04 046019 A (SUMITOMO CHEM CO LTD), 17. Februar 1992 (1992-02-17)**

**Beschreibung**

Die vorliegende Patentanmeldung betrifft Eisenoxidgelb-Pigmente der α-FeOOH-Modifikation mit geringem Silking-Index, die einen hohen Gelbwert b* aufweisen, Verfahren zu deren Herstellung sowie deren Verwendung.

Gelbe Eisenoxid-Pigmente der α-FeOOH-Modifikation können hergestellt werden durch Fällverfahren aus Fe(II)-Salzlösungen und anschließende Oxidation mit Luft oder anderen Oxidationsmitteln oder nach dem sogenannten Penniman-Zoph-Verfahren in Gegenwart von metallischem Eisen und gleichzeitiger Oxidation mit Luft oder durch Oxidation von metallischem Eisen mit anderen Oxidationsmitteln, insbesondere mit aromatischen Nitroverbindungen.

Die so hergestellten gelben Eisenoxide finden hauptsächlich Verwendung als Pigmente in Lack- und Anstrichstoffen, Baustoffen oder zur Einfärbung von Kunststoffen.

Die koloristischen Eigenschaften der gelben Eisenoxid-Pigmente werden im wesentlichen durch die Teilchengröße, Teilchenform, Teilchengrößenverteilung sowie durch den Agglomerationszustand bestimmt. α-FeOOH-Teilchen, die über die obengenannten Verfahren hergestellt wurden, kristallisieren im allgemeinen in einer ausgeprägten Nadelform aus. Die Streu- und Absorptionskoeffizienten senkrecht bzw. parallel zur Nadelachse unterscheiden sich dabei beträchtlich. Richtet man die Nadeln einmal senkrecht und einmal parallel zur Beobachtungsrichtung aus, zeigen sich für den Beobachter deutliche Farbunterschiede. Diesen Effekt nennt man Silking-Effekt, da er auch von Seidengeweben (engl.:silk) her bekannt ist. In bezug auf Eisenoxid-Pigmente tritt der Silking-Effekt besonders störend bei gerichtet aufgetragenen Lackierungen (sogenannter Bilderrahmeneffekt) sowie bei der Ausrichtung der Pigmente bei der Extrudierung und Kalandrierung von Kunststoffen und Kunststoffolien auf.

Im Patent DE-C 33 26 632 sind Verfahren zur Herstellung von Eisenoxidgelb-Pigmenten mit geringem Silking-Effekt beschrieben. Die dort beanspruchten Pigmente werden so hergestellt, daß man die Keimbildung in Gegenwart von Verbindungen der Elemente B, Al, Ga, Si, Ge, Sn oder Pb, insbesondere in Gegenwart von Silikaten oder Aluminaten, in Mengen von 0,05 bis 10 Gew.%, berechnet als 3- oder 4-wertige Oxide und bezogen auf das bei der Keimbildung ausgefällte α-FeOOH, vornimmt und auf den so hergestellten Gelbkeim in üblicher Weise ein Eisenoxidgelb-Pigment aufwachsen läßt. Beim Pigmentaufbau wird in DE-C 33 26 632 auf den Stand der Technik verwiesen. Die Patentbeispiele zeigen, daß die Fällung bei einem konstanten pH-Wert von $4,0 \pm 0,1$ durchgeführt wird und der Aufbau relativ schnell erfolgt, so daß nach 12 bis 25 h Vervielfältigungsfaktoren von 7 bis 14 erreicht werden. Die Pigmente zeichnen sich dadurch aus, daß sie einen sehr niedrigen Silking-Effekt aufweisen und bei einer farblichen Abtestung in einem Lack auf Basis von ®Alkydal F48 (mittelöliger Alkydharzlack; Bayer AG) bei einer Pigment-Volumen-Konzentration von 10% im CIELAB-Farbenraum in den Grenzen von L* zwischen 52 und 63, a* zwischen 8 und 14 sowie b* zwischen 40 und 48 liegen. Das Verschwinden des Silking-Effekts wird dabei dadurch erreicht, daß hochverzweigte Nadeln gebildet werden, die zu "igelförmigen" Aggregaten zusammengewachsen sind. Diese annähernd isometrischen Aggregate lassen sich nicht mehr in bestimmte Vorzugsrichtungen ausrichten.

Nachteilig bei den gemäß DE-C 33 26 632 hergestellten Pigmenten ist, daß sie zum einen mahlempfindlich sind und zum anderen in bezug auf den Gelbwert b* noch nicht die Spitzenwerte erreichen, die von einigen hellen Eisenoxidgelb-Pigmenten mit Silking-Effekt vorgegeben sind.

Aufgabe war daher, nicht silkende, relativ mahlunempfindliche Eisenoxidgelb-Pigmente mit hohem Gelbanteil b* herzustellen.

Überraschenderweise gelingt die Herstellung der gewünschten Pigmente, indem man ausgehend von den in DE-C 33 26 632 beschriebenen Keimen völlig Dendriten-freie Primärteilchen herstellt, die zu päckchenförmigen Agglomeraten zusammengelagert sind. Dabei haben die Primärteilchen selbst nur noch eine sehr gering ausgeprägte Nadelform. Verfahrenstechnisch erreicht man die geänderte Primärteilchen- und Agglomerationsstruktur dadurch, daß man den Pigmentaufbau bei pH-Werten unterhalb von pH 3,9, bevorzugt unterhalb von pH 3,8 durchführt und gleichzeitig die Pigmente sehr langsam aufbaut.

Gegenstand der Erfindung ist ein Verfahren zur Herstellung von Eisenoxidgelb-Pigmenten der α-FeOOH-Modifikation, in dem

a) die Bildung von α-FeOOH-Keimen durch Fällung aus einer Fe(II)-haltigen Lösung mit einem alkalischen Fällungsmittel in Gegenwart von löslichen Aluminiumsalzen in der Menge von umgerechnet 3 bis 9 Gew.-% $Al_2O_3$, bezogen auf ausgefälltes α-FeOOH, und anschließende Oxidation zu α-FeOOH erfolgt und

b) der Pigmentaufbau durch Ausfällung von weiterem Eisen bei gleichzeitiger Oxidation durchgeführt wird, wobei die Keim-Zeit-Ausbeute weniger als 0,3 h$^{-1}$, bevorzugt weniger als 0,2 h$^{-1}$, beträgt und der pH-Wert über den gesamten Zeitraum des Pigmentaufbaus unter pH 3,9, bevorzugt unter pH 3,8 liegt und

c) der Pigmentaufbau bei einem Vervielfältigungsfaktor zwischen 3 und 20 beendet wird.

Im ersten Verfahrensschritt stellt man also einen α-FeOOH-Keim her, indem man eine Fe(II)-Salzlösung,

bevorzugt eine FeSO$_4$-Lösung, und eine Aluminiumsalz-Lösung, bevorzugt eine Aluminiumsulfat-Lösung, vorlegt, diese auf die gewünschte Keimbildungstemperatur aufheizt, die sich zwischen Raumtemperatur und 80°C bewegen kann, dann unter Rühren einen Teil der Eisenionen mit einem alkalischen Fällungsmittel ausfällt, wobei als Fällungsmittel insbesondere Alkali- und Erdalkalioxide, -hydroxide oder -carbonate sowie Ammoniak zu nennen sind, und dann das Fällungsprodukt mit Luft oder anderen Oxidationsmitteln zu $\alpha$-FeOOH oxidiert. Der Al$_2$O$_3$-Gehalt beträgt zwischen 3 und 9 Gew.-%, bezogen auf die hergestellte $\alpha$-FeOOH-Menge.

Im zweiten Verfahrensschritt läßt man diese Keime über Fäll- und Oxidationsverfahren zu Pigmenten aufwachsen, indem man weitere Eisen(II)-Salzlösung zufügt und diese durch gesteuerte Zugabe von Fällungsmittel bei gleichzeitiger Oxidation zu $\alpha$-FeOOH umsetzt. Um die erfindungsgemäßen Pigmente erhalten zu können, muß dabei darauf geachtet werden, daß der pH-Wert während des gesamten Pigmentbildungsschrittes unterhalb von pH=3,9, vorzugsweise unterhalb von pH=3,8, gehalten wird und gleichzeitig der Pigmentaufbau sehr langsam durchgeführt wird. Um die Pigmentaufbaurate zu charakterisieren, hat sich die konzentrationsunabhängige Größe der sogenannten Keim-Zeit-Ausbeute bewährt. Diese ist definiert zu:

$$\text{Keim-Zeit-Ausbeute} = \frac{\text{Menge gebildetes Pigment}}{\text{Menge eingesetzter Keim} \cdot \text{Pigmentbildungsdauer}}$$

$$= \frac{\text{VVF-1}}{\text{Pigmentbildungsdauer}}$$

Dabei bedeutet der sogenannte Vervielfältigungsfaktor (VVF) das Verhältnis von Gesamtpigmentmenge (=Keimmenge + Menge gebildetes Pigment) zu Keimmenge.

Zur Herstellung der erfindungsgemäßen Pigmente ist dabei eine Keim-Zeit-Ausbeute von weniger als 0,3 h$^{-1}$, bevorzugt weniger als 0,1 h$^{-1}$, erforderlich. Die Keim-Zeit-Ausbeute kann über den pH-Wert und die Begasung gesteuert werden.

Die Keime werden auf Vervielfältigungsfaktoren zwischen 3 und 20 aufgebaut, je nachdem, ob das Pigment in Purton oder in Aufhellung eingesetzt werden soll. Hoch aufgebaute Pigmente mit einem Vervielfältigungsfaktor zwischen 8 und 20 zeichnen sich durch einen besonders hohen CIELAB-Wert b* im Purton aus. Derartige Eisenoxidgelb-Pigmente weisen kolorische Werte im CIELAB-Farbraum im Purton bei einer Pigment-Volumen-Konzentration von 10 % im Prüflack für a* zwischen 8 und 14, für b* zwischen 48,5 und 52 und für L* zwischen 54 und 62 auf.

Niedrig aufgebaute Pigmente mit einem Vervielfältigungsfaktor zwischen 3 und 8 zeichnen sich durch einen besonders hohen CIELAB-Wert b* in der Aufhellung aus. Derartige Eisenoxidgelb-Pigmente weisen kolorische Werte im CIELAB-Farbraum in der Aufhellung mit einem Titandioxid-Pigment im Verhältnis 1:5 bei einer Pigment-Volumen-Konzentration von 10 % im Prüflack für a* zwischen 3 und 7 und b* zwischen 38 und 41 auf.

Elektronenmikroskopische Aufnahmen zeigen, daß die Primärteilchen im Gegensatz zu den bisher bekannten Verfahren nur noch eine wenig ausgeprägte Nadelform aufweisen, völlig Dendriten-frei sind und sich zu päckchenförmigen Agglomeraten zusammengelagert haben. Der Gelbwert b* der Pigmente ändert sich bei einer Mahlung nur geringfügig.

Die erfindungsgemäßen Pigmente zeichnen sich alle durch einen niedrigen Silking-Index aus, der weniger als 5, vorzugsweise weniger als 3, insbesondere weniger als 1, beträgt.

Weiterhin zeichnen sich die erfindungsgemäßen Pigmente durch einen geringen Bindemittelbedarf bei der Lackherstellung aus. Dieser läßt sich durch Ölzahlen von kleiner als 40 g/ 100 g charakterisieren.

Aufgrund ihrer Eigenschaften eignen sich die erfindungsgemäßen Pigmente besonders zur Herstellung von Lacken und Anstrichstoffen und zur Einfärbung von Kunststoffen. Die Verwendung der erfindungsgemäßen Pigmente zur Einfärbung von Lacken, Anstrichstoffen oder Kunststoffen ist daher ebenfalls Gegenstand der Erfindung.

Die in den folgenden Beispielen angeführten Teile und Prozente beziehen sich auf das Gewicht, soweit nicht anders vermerkt.

## 1. Silking-Index

Als eine referenzunabhängige Meßgröße für den Silking-Effekt wird der sogenannte Silking-Index definiert. Der Silking-Index wird nach folgender Methode gemessen und berechnet:

1.1 Präparation in einer Alkydharz-Paste zur Messung des Silking-Indexes

Das Pigment wird mit einer Teller-Farbenausreibmaschine (Muller) in einem nichttrocknenden Prüfbindemittel präpariert. Das Prüfbindemittel (Paste) besteht aus zwei Komponenten:

Komponente 1:

Komponente 1 ist ein Alkydharz-Bindemittel auf Basis Leinöl und Phthalsäureanhydrid. Es entspricht den Spezifikationen, die in den Normen DIN EN ISO 787-24:1995, ISO 787-25:1993 und DIN 55 983 (Dezember 1983) als Anforderungen an ein Prüfbindemittel für Farbpigmente genannt werden. Zur Anwendung kommt das Produkt ®Sacolyd L 640 (Krems Chemie, ehemals ®Alkydal L 64, Bayer AG).

Komponente 2:

Komponente 2 ist ein rheologisches Additiv, welches zum Erreichen eines thixotropen Verhaltens der Paste zugesetzt wird. Zur Anwendung kommt ein pulverförmiges, modifiziertes, hydriertes Rizinusöl, ®LUVOTHIX HT (Firma Lehmann & Voss & Co) in der Konzentration von 5,0 %.

Das Luvothix HT wird in dem Sacolyd L 640 bei 75 bis 95°C gelöst. Die abgekühlte, stichfeste Masse wird einmal über ein Dreiwalzwerk gegeben. Damit ist die Paste fertiggestellt.

Zur Herstellung der Pigment-Paste wird ein Muller (Teller-Farbenausreibmaschine) verwendet, wie in DIN EN ISO 8780-5 (April 1995) beschrieben. Zur Anwendung kommt ein ®ENGELSMANN JEL 25/53 Muller mit einem wirksamen Tellerdurchmesser von 24 cm. Die Drehzahl des unteren Tellers beträgt ca. 75 min$^{-1}$. Durch Einhängen eines 2,5 kg Belastungsgewichtes auf den Belastungsbügel wird die Kraft zwischen den Tellern auf ca. 0,5 kN eingestellt. Es werden 0,40 g Pigment und 5,00 g Paste in drei Stufen zu je 25 Umdrehungen nach dem in DIN EN ISO 8780-5 (April 1995) Abschnitt 8.1 beschriebenen Verfahren dispergiert.

Anschließend wird die Pigment-Pasten-Mischung in einen Pastenteller eingestrichen, der in seiner Funktion dem Pastenteller in DIN 55983 (Dezember 1983) entspricht. Die zum Pastenteller gehörige Rakel wird über die mit der Pigment-Pasten-Mischung gefüllte Vertiefung des Tellers gezogen, so daß ein glatte Oberfläche entsteht. Die Rakel wird dabei in einer Richtung mit einer Geschwindigkeit von ca. 3 bis 7 cm/s bewegt. Hierdurch werden eventuell im Pigment vorhandene nadelförmige Teilchen in Richtung der Rakelung ausgerichtet. Die Probe wird innerhalb weniger Minuten gemessen.

1.2. Meßgerät zur Messung des Silking-Indexes

Die zur Silking-Messung verwendete Meßgeometrie 8/d ist in ISO 7724/2-1984 (E) Punkt 4.1.1, in DIN 5033 Teil 7 (Juli 1983) Punkt 3.2.4 und in DIN 53 236 (Januar 1983) Punkt 7.1.1 beschrieben. Zur Anwendung kommt ein ®PERKIN ELMER LAMBDA 19 Spektrophotometer mit einer ®LABSPHERE Ulbrichtkugel mit 15 cm Durchmesser.

Zur Messung wird ein handelsübliches Folien-Linearpolarisationsfilter ausreichender Größe außerhalb der Integrationskugel in den Beleuchtungsstrahlengang der Probe in definierter Lage eingebracht, so daß die Richtung des E-Vektors (Elektrisches Feld) des durchgelassenen Lichtstrahls im Meßfleck (Probenöffnung) bekannt ist. Der Filter hat einen Polarisationsgrad >99 %. Der Referenzstrahlengang bleibt unverändert ohne Filter.

Die Referenz-Meßöffnung der Integrationskugel wird mit einem diffus streuenden, weißen Opalglasstandard verschlossen. Eine Glanzfalle wird nicht verwendet.

Nach der Installation des Filters wird ein weiterer weißer Opalglasstandard (Arbeitsstandard) an die Probenöffnung angelegt und das Meßgerät kalibriert. Der Arbeitsstandard erfüllt die in ISO 7724/2-1984 (E) Abschnitt 8.3 beschriebenen Anforderungen. Die Reflexionsdaten des Arbeitsstandards gegen einen ideal mattweißen Körper werden im Computer hinterlegt, so daß nach Kalibrierung mit dem weißen Arbeitsstandard alle Farbmessungen auf den ideal mattweißen Körper bezogen werden. Der Dunkelstrom im Schwarzpunkt wird mit einem schwarzen Hohlkörper gemessen, im Computer gespeichert und bei der Kalibrierung vom Meßprogramm berücksichtigt.

1.3. Messung und Berechnung des Silking-Indexes

Die Messung erfolgt unmittelbar nach der Präparation der Prüflinge. Die Temperatur von Farbmeßgerät (Reflexionsspektrometer) und Probe beträgt ca. 25°C ± 5°C.

Die Probe wird in zwei senkrecht aufeinanderstehenden Positionen bezogen auf das Polfilter gemessen:

| Messung Y1∥ | Die Pigmentteilchen sind mit ihrer längsten Achse weitgehend parallel zum E-Vektor der Beleuchtung ausgerichtet. Die Abziehrichtung der Rakel liegt parallel zum E-Vektor. |
|---|---|
| Messung Y2⊥ | Die Pigmentteilchen sind mit ihrer längsten Achse weitgehend senkrecht zum E-Vektor der Beleuchtung ausgerichtet. Die Abziehrichtung der Rakel und der Vektor stehen senkrecht aufeinander. |

Eine Vorrichtung zur Drehung der Probe um 90° ist hilfreich, aber nicht unbedingt notwendig, wenn an der Probenöffnung geeignete Markierungen angebracht sind.

Aus den gemessenen Reflexionsspektren werden nach den Berechnungsanweisungen in ASTM E 308 - 1985, Punkt 7 die Normfarbwerte Y berechnet. Zur Verwendung kommen die Gewichtungsfunktionen der Normlichtart C und des 2°-Normalbeobachters von 1931 in Table 5.6. Der Wellenlängenbereich liegt zwischen 400 nm und 700 nm. Das Wellenlängenintervall beträgt 20 nm. Es wird rechnerisch kein Glanz abgezogen.

Der Silking-Index SI wird dann wie folgt aus den Normfarbwerten Y berechnet:

$$SI = (1 - Y1\|/Y2^{\perp})*100$$

Das Ergebnis wird auf eine ganze Zahl gerundet.

### 2. Farbwerte im CIELAB-Farbenraum

2.1 Präparation in einem Alkydharzlack zur Messung des Purtons

Das Pigment wird mit einem Muller (Teller-Farbenausreibmaschine) in einem lufttrocknenden Lacksystem dispergiert. Das Lacksystem (Lack) besteht aus folgenden Komponenten:

| | |
|---|---|
| 95,26 % | ®ALKYDAL F 48 (Bindemittel, Bayer AG, mittelöliges, lufttrocknendes Alkydharz auf Basis trocknender pflanzlicher Fettsäuren in Test-benzin/Xylol-Gemisch 38:7 mit einem nichtflüchtigen Anteil von ca. 55 %, Ölgehalt/Triglycerid im nichtflüchtigen Anteil ca. 48 %, Phthalsäureanhydrid im nichtflüchtigen Anteil ca. 26 %) |
| 0,78 % | 2-Butanonoxim, 55 %ig in Testbenzin (Hautverhinderungsmittel) |
| 1,30 % | ®Octa Soligen Calcium (Netzmittel, Calciumsalz verzweigter $C_6$-$C_{19}$-Fettsäuren im Kohlenwasserstoffgemisch (enthält 4 % Ca), Borchers AG) |
| 0,22 % | ®Octa Soligen Kobalt 6 (Trockenstoff, Kobalt(2+)salz verzweigter $C_6$-$C_{19}$-Fettsäuren im Kohlenwasserstoffgemisch (enthält 6 % Co), Borchers AG) |
| 0,87 % | ®Octa Soligen Zirkonium 6 (Trockenstoff, Zirkoniumsalz verzweigter $C_6$-$C_{19}$-Fettsäuren im Kohlenwasserstoffgemisch (enthält 6 % Zr), Borchers AG) |
| 1,57 % | Glykolsäure-n-butylester (= Hydroxyessigsäurebutylester) (Verlaufsverbesserer) |

Die Komponenten werden mit einem Schnellrührer zum fertigen Lack vermischt. Verwendet wird eine Teller-Farbenausreibmaschine (Muller), wie in DIN EN ISO 8780-5 (April 1995) beschrieben. Zur Anwendung kommt ein ®ENGELSMANN JEL 25/53 Muller mit einem wirksamen Tellerdurchmesser von 24 cm. Die Drehzahl des unteren Tellers beträgt ca. 75 min$^{-1}$. Durch Einhängen eines 2,5 kg Belastungsgewichtes auf den Belastungsbügel wird die Kraft zwischen den Tellern auf ca. 0,5 kN eingestellt. Es werden 0,80 g Pigment und 2,00 g Lack in einer Stufe zu 100 Umdrehungen mit 2,5 kg Belastungsgewicht nach dem in DIN EN ISO 8780-5 (April 1995) Abschnitt 8.1 beschriebenen Verfahren dispergiert. Der Muller wird geöffnet und der Lack zügig auf dem unteren Teller außerhalb des Mittelpunktes gesammelt. Anschließend werden weitere 2,00 g Lack zugesetzt und die Teller zusammengeklappt. Nach zwei Stufen zu 50 Umdrehungen ohne Belastungsgewicht ist die Präparation beendet.

Der pigmentierte Lack wird mit einem Filmzieher (Spalthöhe mindestens 150 μm, höchstens 250 μm) auf einem nicht saugfähigen Karton aufgestrichen. Der lackierte Karton (Aufstrich) wird dann mindestens 12 h bei Raumtemperatur getrocknet. Vor der Farbmessung wird der Aufstrich eine Stunde bei ca. 65 °C (± 5°C) getrocknet und abgekühlt.

2.2 Präparation in einem Alkydharzlack zur Messung der Aufhellung

Das Pigment und das Aufhellmittel werden mit einem Muller (Teller-Farbenausreibmaschine) in einem lufttrocknenden Lacksystem dispergiert. Als Aufhellmittel wird ein handelsübliches ®Bayertitan R-KB-2 Titandioxidpigment (Bayer AG) verwendet. Dieses Pigment entspricht dem Typ R 2 in ISO 591 - 1977. Das Lacksystem (Lack) entspricht dem unter Punkt 2.1 beschriebenen.

Die Komponenten des Lacksystems werden mit einem Schnellrührer zum fertigen Lack vermischt.

Die Herstellung des pigmentierten Lackes und die des Lackaufstriches erfolgen so, wie unter 2.1 beschrieben, wobei 0,1500 g zu prüfendes Pigment, 0,7500 g ®Bayertitan R-KB-2 Titandioxidpigment und 2,00 g Lack eingewogen werden.

2.3 Farbmeßgerät

Es wird ein Spektrophotometer ("Farbmeßgerät") mit einer Ulbrichtkugel mit der Meßgeometrie d/8 ohne Glanzfalle verwendet. Diese Meßgeometrie ist in ISO 7724/2-1984 (E) Punkt 4.1.1, in DIN 5033 Teil 7 (Juli 1983) Punkt 3.2.4 und in DIN 53236 (Januar 1983) Punkt 7.1.1 beschrieben. Zur Anwendung kommt ein ®Dataflash 2000 Meßgerät der Firma Datacolor International.

Das Farbmeßgerät wird gegen einen weißen, keramischen Arbeitsstandard kalibriert, wie in ISO 7724/2-1984 (E) Punkt 8.3 beschrieben. Die Reflexionsdaten des Arbeitsstandards gegen einen ideal mattweißen Körper sind im Farbmeßgerät hinterlegt, so daß nach Kalibrierung mit dem weißen Arbeitsstandard alle Farbmessungen auf den ideal mattweißen Körper bezogen werden. Die Schwarzpunktkalibrierung wird mit einem schwarzen Hohlkörper des Farbmeßgeräteherstellers ausgeführt.

2.4 Farbmessung

Eine möglicherweise vorhandene Glanzfalle ist ausgeschaltet. Die Temperatur von Farbmeßgerät und Prüfling beträgt ca. 25 °C ± 5 °C.

Der gemäß 2.1 oder 2.2 hergestellte Lackaufstrich wird so an das Farbmeßgerätes gelegt, daß die Meßöffnung eine mittlere Stelle der Lackschicht abdeckt. Der Aufstrich muß vollständig und plan anliegen. Die Meßöffnung muß vollständig von der Lackschicht bedeckt sein. Anschließend erfolgt die Messung.

2.5 Berechnung der CIE-Koordinaten

Aus dem gemessenen Reflexionsspektrum werden nach den Berechnungsanweisungen in ASTM E 308 - 1985, Punkt 7 die CIE-Koordinaten L*, a* und b* von 1976 berechnet. Zur Verwendung kommen die Gewichtungsfunktionen der Normlichtart C und des 2°-Normalbeobachters von 1931 in ASTM E 308 - 1985, Table 5.6. Der Wellenlängenbereich liegt zwischen 400 nm und 700 nm. Das Wellenlängenintervall beträgt 20 nm. Es wird rechnerisch kein Glanz abgezogen. Die erhaltenen Remissionswerte werden nach DIN 5033, Teil 3 (Juli 1992) in das CIELAB-Farbdatensystem umgerechnet.

**Beispiele**

Im folgenden wird die Erfindung beispielhaft erläutert, ohne daß darin eine Einschränkung zu sehen ist.

**Beispiel 1**

In einen Glasbehälter werden 8 1 einer technischen Eisensulfat-Lösung mit einem Gehalt von 170 g/l eingefüllt. Dazu werden 321 g einer $Al_2(SO_4)_3$- Lösung zugefügt, die umgerechnet 7,54 Gew.% $Al_2O_3$ enthält. Die Lösung wird unter Begasung mit Stickstoff auf 40°C aufgeheizt. Durch Zugabe von NaOH wird der pH-Wert auf 3,5 eingestellt. Anschließend werden unter weiterer Stickstoff-Begasung und unter Rühren innerhalb von 20 min 1056 ml Natronlauge mit einem Gehalt von 344 g NaOH/l zugefügt. Nach beendeter Fällung wird unter weiterer Rührung bei 40°C mit einer Luftmenge von 150 l/h begast. Wenn der pH auf 3,6 abgesunken ist, wird die Keimbildung beendet.

Zum Pigmentaufbau werden 4196 ml der obigen Keimsuspension, 1235 ml Eisensulfat-Lösung mit einem $FeSO_4$-Gehalt von 231,4 g/l sowie 569 ml Wasser in einem Glasbehälter unter Rühren auf 75°C aufgeheizt. Danach beginnt der Pigmentaufbau durch gleichzeitige Steuerung der Natronlauge-Zugabe und Luft-Begasung ,so daß der pH-Wert zwischen 3,5 und 3,7 gehalten wird. Wenn der Eisensulfat-Gehalt unter einen Wert von 5 g/l gesunken ist, wird jeweils eine weitere Charge Eisensulfat-Lösung zugegeben, so daß die Konzentration nach Zuchargierung wieder 30 g/l übersteigt. Nach einer Oxidationszeit von 204 h wird eine Probe entnommen, filtriert, gewaschen getrocknet, in einem Mikrodismembrator (Braun AG) durch eine 8 s dauernde Mahlung deagglomeriert und analysiert. Der Vervielfältigungsfaktor beträgt 17,1. Die daraus berechnete Keim-Zeit-Ausbeute beträgt 0,08 $h^{-1}$. Die Daten der Farbauswertungen sind in Tab.1 aufgeführt. Dabei sind neben den Absolutfarbwerten auch die Differenzfarbwerte zum Typ ®Bayferrox 920 (Bayer AG) angegeben. Der Aluminium-Gehalt des Pigmentes beträgt 0,14 %.

## Beispiel 2

Wie Beispiel 1, nur mit reiner Eisensulfat-Lösung. Nach 164 h Oxidationszeit wird eine Probe entnommen, filtriert, gewaschen, getrocknet und deagglomeriert. Der Vervielfältigungsfaktor beträgt 15,8. Die daraus berechnete Keim-Zeit-Ausbeute beträgt 0,09 h$^{-1}$. Die Daten der Farbauswertungen sind in Tab. 1 aufgeführt.

## Beispiel 3

Wie Beispiel 2, nur Probenentnahme nach 184 h Oxidationszeit. Der Vervielfältigungsfaktor beträgt 17,7. Die daraus berechnete Keim-Zeit-Ausbeute beträgt 0,09 h$^{-1}$. Auf einer TEM-Aufnahme sind kurznadelige Teilchen zu erkennen, die zu päckchenförmigen Agglomeraten zusammengelagert sind. Die Probe wurde zur Prüfung der Mahlempfindlichkeit bei der Einarbeitung in den Lack 60 sec bzw. 120 sec in einem Mikrodismembrator (Fa.Braun) mit 10 mm Achatkugeln gemahlen. Die Daten der Farbauswertungen sind in Tab. 1 aufgeführt. Dabei sind neben den Absolutfarbwerten auch die Differenzfarbwerte zum Typ Bayferrox 920 angegeben. Der Al-Gehalt des Pigmentes beträgt 0,15 %.

## Beispiel 4

In einen Glasbehälter werden 8 1 einer technischen Eisensulfatlösung mit einem Gehalt von 170 g/l eingefüllt. Dazu werden 321 g einer $Al_2(SO_4)_3$- Lösung zugefügt, die umgerechnet 7,54 Gew.% $Al_2O_3$ enthält. Die Lösung wird unter Begasung mit Stickstoff auf 40°C aufgeheizt. Durch Zugabe von NaOH wird der pH-Wert auf 3,5 eingestellt. Anschließend werden unter weiterer Stickstoff-Begasung und unter Rühren innerhalb von 20 min 1124 ml Natronlauge mit einem Gehalt von 323 g NaOH/l zugefügt. Nach beendeter Fällung wird unter weiterer Rührung bei 40°C mit einer Luftmenge von 150 l/h begast. Wenn der pH auf 3,5 abgesunken ist, wird die Keimbildung beendet.

Zum Pigmentaufbau werden 4358 ml der obigen Keimsuspension, 1301 ml Eisensulfat-Lösung mit einem $FeSO_4$-Gehalt von 210 g/l sowie 341 ml Wasser in einem Glasbehälter unter Rühren auf 75°C aufgeheizt. Danach beginnt der Pigmentaufbau durch gleichzeitige Steuerung der Natronlauge-Zugabe und Luft-Begasung, so daß der pH-Wert zwischen 3,2 und 3,8 gehalten wird. Wenn der Eisensulfat-Gehalt unter einen Wert von 10 g/l gesunken ist, wird jeweils eine Charge von 2857 ml Eisensulfat-Lösung zugefügt. Nach einer Oxidationszeit von 45 h wird eine Probe entnommen, filtriert, gewaschen, getrocknet, in einem Mikrodismembrator (Fa. Braun) durch eine 8 s dauernde Mahlung deagglomeriert und analysiert. Der Vervielfältigungsfaktor beträgt 6,2. Die daraus berechnete Keim-Zeit-Ausbeute beträgt 0,12 h$^{-1}$. Die Probe wurde in Aufhellung untersucht. Die Daten der Farbauswertungen sind in Tab. 1 aufgeführt.

## Vergleichsbeispiel 1 (gemäß DE-C 33 26 632, Beispiel 4)

Zu 15 309 ml einer Eisensulfat-Lösung mit einem $FeSO_4$-Gehalt von 200 g/l werden 250 ml Aluminiumsulfat-Lösung zugefügt, die 117 g $Al_2(SO_4)_3*18H_2O$ enthalten. Die Lösung wird auf 55°C aufgeheizt. Danach werden unter Rühren und Stickstoff-Begasung innerhalb von 20 min 2506 ml NaOH-Lösung mit einem NaOH-Gehalt von 323 g/l zugefügt und dann mit 400 l/h Luft begast. Die Keimbildung wird beendet, wenn der pH-Wert von 2,8 erreicht ist.

2777 ml der obigen Keimsuspension und 7129 ml Wasser werden unter Stickstoff-Begasung auf 80°C aufgeheizt. Unter gleichzeitiger Begasung mit 1000 l/h Luft und pH-gesteuerter Zudosierung von Natronlauge mit einem Gehalt von 190 g/l NaOH werden 10,75 1 $FeSO_4$-Lösung mit einem Gehalt von 200 g/l $FeSO_4$ innerhalb von 12 h so zugetropft, daß der pH-Wert konstant $4,0 \pm 0,1$ beträgt. Das gebildet Pigment wird filtriert , gewaschen, getrocknet und deagglomeriert. Der Vervielfältigungsfaktor beträgt 11,1. Die daraus berechnete Keim-Zeit-Ausbeute liegt bei 0,84 h$^{-1}$. Die Daten der Farbauswertungen sind in Tab. 1 aufgeführt. Dabei sind neben den Absolutfarbwerten auch die Differenzfarbwerte zum Typ Bayferrox 920 angegeben.

## Vergleichsbeispiel 2 (gemäß DE-C 33 26 632, Beispiel 7)

Zu 15309 ml einer Eisensulfat-Lösung mit einem $FeSO_4$-Gehalt von 200 g/l werden 400 ml Aluminiumsulfatlösung zugefügt, die 351 g $Al_2(SO_4)_3*18H_2O$ enthalten. Die Lösung wird auf 55°C aufgeheizt. Danach werden unter Rühren und Stickstoff-Begasung innerhalb von 20 min 2506 ml NaOH-Lösung mit einem NaOH-Gehalt von 323 g/l zugefügt und dann mit 400 l/h Luft begast. Die Keimbildung wird beendet, wenn der pH-Wert von 2,8 erreicht ist.

2978 ml der obigen Keimsuspension und 7022 ml Wasser werden unter Stickstoff-Begasung auf 80°C aufgeheizt. Unter gleichzeitiger Begasung mit 1000 l/h Luft und pH-gesteuerter Zudosierung von Natronlauge mit einem Gehalt von 190 g/l NaOH werden 7 1 $FeSO_4$-Lösung mit einem Gehalt von 200 g/l $FeSO_4$ innerhalb von 13 h so zugetropft, daß der pH-Wert konstant $4,0 \pm 0,1$ beträgt. Das gebildet Pigment wird filtriert, gewaschen, getrocknet und deagglomeriert. Der Vervielfältigungsfaktor beträgt 7,2. Die daraus berechnete Keim-Zeit-Ausbeute liegt bei 0,48 h$^{-1}$.

Die Probe wird zur Prüfung der Mahlempfindlichkeit bei der Einarbeitung in den Lack 60 sec bzw. 120 sec in einem Mikrodismembrator (Fa. Braun) mit 10 mm Achatkugeln gemahlen. Die Daten der Farbauswertungen sind in Tab. 1 aufgeführt. Dabei sind neben den Absolutfarbwerten auch die Differenzfarbwerte zum Typ Bayferrox 920 angegeben.

**Tabelle 1:** Farbauswertungen der Proben aus den Beispielen 1 bis 4 und Vergleichsbeispielen 1 und 2

| Beispiel | Silking-Index | Purton/Auf-hellung | Mahlung | a* | b* | L* | da* gegen Typ Bayferrox 920 | db* gegen Typ Bayferrox 920 | dL* gegen Typ Bayferrox 920 |
|---|---|---|---|---|---|---|---|---|---|
| 1 | 0,8 | Purton | 8 | 12 | 49,3 | 59 | 1,2 | 2,9 | -0,5 |
| 2 | 0,6 | Purton | 8 | 12 | 48,8 | 58,2 | 1,2 | 2,4 | -1,3 |
| 3 | 0,8 | Purton | 8 | 12,1 | 48,8 | 58,1 | 1,3 | 2,4 | -1,4 |
| 3 | 1,9 | Purton | 60sec | 11,3 | 48,8 | 59,4 | 0,3 | 2,6 | 0,1 |
| 3 | 2,5 | Purton | 120sec | 11 | 48,6 | 59,8 | 0 | 2,4 | 0,5 |
| 4 | 1,5 | Aufhellung | 8 | 4,1 | 39 | 82,1 | -0,3 | 4,7 | 4,7 |
| Vergl.Bsp. 1 | 3,5 | Purton | 8 | 11 | 43,7 | 58,3 | 0,1 | -2,6 | -1 |
| Vergl.Bsp. 2 | 1,4 | Purton | 8 | 12,7 | 45,1 | 56 | 1,9 | -1,3 | -3,5 |
| Vergl.Bsp. 2 | 1,6 | Purton | 60sec | 12,3 | 44,6 | 56,2 | 1,5 | -1,8 | -3,3 |
| Vergl.Bsp. 2 | 1,8 | Purton | 120sec | 12,2 | 44,1 | 56,2 | 1,4 | -2,3 | -3,3 |

EP 0 918 076 B1

**Patentansprüche**

1. Verfahren zur Herstellung von Eisenoxidgelb-Pigmenten der α-FeOOH-Modifikation, in dem

    a) die Bildung von α-FeOOH-Keimen durch Fällung aus einer Fe(II)-haltigen Lösung mit einem alkalischen Fällungsmittel in Gegenwart von löslichen Aluminiumsalzen in der Menge von umgerechnet 3 bis 9 Gew.-% $Al_2O_3$, bezogen auf ausgefälltes α-FeOOH, und anschließende Oxidation zu α-FeOOH erfolgt und

    b) der Pigmentaufbau durch Ausfällung von weiterem Eisen bei gleichzeitiger Oxidation durchgeführt wird, wobei die Keim-Zeit-Ausbeute weniger als 0,3 $h^{-1}$ beträgt und der pH-Wert über den gesamten Zeitraum des Pigmentaufbaus unter pH 3,9 liegt und

    c) der Pigmentaufbau bei einem Vervielfältigungsfaktor zwischen 3 und 20 beendet wird.

2. Verfahren nach Anspruch 1, **dadurch gekennzeichnet, daß** der Pigmentaufbau bei einem Vervielfältigungsfaktor von 8 bis 20 beendet wird.

3. Verfahren nach Anspruch 1, **dadurch gekennzeichnet, daß** der Pigmentaufbau bei einem Vervielfältigungsfaktor von 3 bis 8 beendet wird.

4. Eisenoxidgelb-Pigmente der α-FeOOH-Modifikation mit einem Silking-Index SI kleiner als 5, deren koloristische Werte im CIELAB-Farbenraum im Purton bei einer Pigment-Volumen-Konzentration von 10 % im Prüflack für a* zwischen 8 und 14, für b* zwischen 48,5 und 52 und für L* zwischen 54 und 62 liegen.

5. Eisenoxidgelb-Pigmente gemäß Anspruch 4, **dadurch gekennzeichnet, daß** der Silking-Index SI kleiner als 3 ist.

6. Eisenoxidgelb-Pigmente gemäß Anspruch 4, **dadurch gekennzeichnet, daß** der Silking-Index SI kleiner als 1 ist.

7. Eisenoxidgelb-Pigmente der α-FeOOH-Modifikation mit einem Silking-Index von SI kleiner als 5, deren koloristische Werte im CIELAB-Farbenraum in Aufhellung mit einem Titandioxid-Pigment in einem Verhältnis von 1:5 bei einer Pigment-Volumen-Konzentration von 10 % im Prüflack für a* zwischen 3 und 7 und für b* zwischen 38 und 41 liegen.

8. Eisenoxidgelb-Pigmente gemäß Anspruch 7, **dadurch gekennzeichnet, daß** der Silking-Index SI kleiner als 3 ist.

9. Eisenoxidgelb-Pigmente gemäß Anspruch 7, **dadurch gekennzeichnet, daß** der Silking-Index SI kleiner als 1 ist.

10. Verwendung der Eisenoxidgelb-Pigmente gemäß einem der Ansprüche 4 bis 9 zur Einfärbung von Lacken, Anstrichstoffen oder Kunststoffen.

**Claims**

1. A process for preparing iron oxide yellow pigments in the α-FeOOH modification in which

    a) α-FeOOH nuclei are produced by precipitation from an Fe(II)-containing solution using an alkaline precipitating agent in the presence of soluble aluminium salts in an amount of 3 to 9 wt.% calculated as $Al_2O_3$, with respect to precipitated α-FeOOH, and subsequent oxidation to give α-FeOOH and

    b) pigment is produced by precipitating further iron with simultaneous oxidation, wherein the nucleus/time yield is less than 0.3 $h^{-1}$ and the pH over the entire period of pigment production is less than 3.9 and

    c) pigment production is terminated at a reproduction factor between 3 and 20.

2. A process according to Claim 1, **characterised in that** pigment production is terminated at a reproduction factor of 8 to 20.

3. A process according to Claim 1, **characterised in that** pigment production is terminated at a reproduction factor of 3 to 8.

**4.** Iron oxide yellow pigments in the $\alpha$-FeOOH modification with a silking index SI of less than 5, whose colour indices on the CIELAB colour coordinates in the pure shade and with a pigment/volume concentration of 10 % in the test lacquer are a* between 8 and 14, b* between 48.5 and 52 and L* between 54 and 62.

**5.** Iron oxide yellow pigments according to Claim 4, **characterised in that** the silking index SI is less than 3.

**6.** Iron oxide yellow pigments according to Claim 4, **characterised in that** the silking index SI is less than 1.

**7.** Iron oxide yellow pigments in the $\alpha$-FeOOH modification with a silking index of SI less than 5, whose colour indices on the CIELAB colour coordinates during lightening with a titanium dioxide pigment at a ratio of 1:5 and with a pigment/volume concentration of 10 % in the test lacquer are a* between 3 and 7 and b* between 38 and 41.

**8.** Iron oxide yellow pigments according to Claim 7, **characterised in that** the silking index SI is less than 3.

**9.** Iron oxide yellow pigments according to Claim 7, **characterised in that** the silking index SI is less than 1.

**10.** Use of iron oxide yellow pigments according to one of Claims 4 to 9 for colouring lacquers, paints or plastic materials.


**Revendications**

**1.** Procédé pour la préparation d'oxydes de fer pigmentaires jaunes de la forme $\alpha$-FeOOH dans lequel

a) on forme des germes d'$\alpha$-FeOOH par précipitation à partir d'une solution contenant Fe(II) à l'aide d'un agent précipitant alcalin en présence de sels solubles de l'aluminium en quantité, exprimée en $Al_2O_3$, de 3 à 9 % en poids par rapport à l'$\alpha$-FeOOH précipité, puis on oxyde en $\alpha$-FeOOH et
b) on provoque la croissance du pigment par précipitation de compléments de fer avec oxydation simultanée, le rendement en germes dans le temps étant inférieur à 0,3 h$^{-1}$ et le pH étant inférieur à 3,9 pendant toute la durée de croissance du pigment et
c) on arrête la croissance du pigment à un facteur de multiplication de 3 à 20.

**2.** Procédé selon la revendication 1, **caractérisé en ce que** la croissance du pigment est arrêtée à un facteur de multiplication de 8 à 20.

**3.** Procédé selon la revendication 1, **caractérisé en ce que** la croissance du pigment est arrêtée à un facteur de multiplication de 3 à 8.

**4.** Oxydes de fer pigmentaires jaunes de la forme $\alpha$-FeOOH ayant un indice de chatoiement IC inférieur à 5, et des valeurs coloristiques dans l'espace des couleurs CIELAB, en ton pur et à une concentration du pigment de 10 % en volume dans le vernis pour essais, de 8 à 14 pour a*, de 48,5 à 52 pour b* et de 54 à 62 pour L*.

**5.** Oxydes de fer pigmentaires jaunes selon la revendication 4, **caractérisés en ce que** l'indice de chatoiement IC est inférieur à 3.

**6.** Oxydes de fer pigmentaires jaunes selon la revendication 4, **caractérisés en ce que** l'indice de chatoiement IC est inférieur à 1.

**7.** Oxydes de fer pigmentaires jaunes de la forme $\alpha$-FeOOH avec un indice de chatoiement IC inférieur à 5 et dont les valeurs coloristiques à l'espace des couleurs CIELAB, en ton éclairci par un pigment de dioxyde de titane au rapport de 1:5 et à une concentration du pigment de 10 % en volume dans le vernis d'essai, sont de 3 à 7 pour a* et de 38 à 41 pour b*.

**8.** Oxydes de fer pigmentaires jaunes selon la revendication 7, **caractérisés en ce que** l'indice de chatoiement IC est inférieur à 3.

9. Oxydes de fer pigmentaires jaunes selon la revendication 7, **caractérisés en ce que** l'indice de chatoiement IC est inférieur à 1.

10. Utilisation des oxydes de fer pigmentaires jaunes selon l'une des revendications 4 à 9 pour la coloration de vernis, d'enduits ou de résines synthétiques.